# EUROPEAN PATENT SPECIFICATION

(11) **EP 4 191 734 B1**
(45) Date of publication and mention of the grant of the patent: **16.04.2025**
(21) Application number: 21883131.1
(22) Date of filing: 14.10.2021
(51) Int. Cl.: H01M 10/42, H01M 50/20, H01M 10/613, H01M 10/627, A62C 35/58, A62C 35/68, A62C 37/38, A62C 3/16, F16L 33/00, F16L 37/00, F16L 11/12, H01M 10/48, H01M 50/204, F16L 41/02, A62C 37/14

(54) **BATTERY RACK, POWER STORAGE DEVICE, AND POWER GENERATION SYSTEM**
BATTERIEGESTELL, ENERGIESPEICHERVORRICHTUNG UND STROMERZEUGUNGSSYSTEM
SUPPORT DE BATTERIE, APPAREIL DE STOCKAGE D'ÉNERGIE ET SYSTÈME DE PRODUCTION D'ÉNERGIE

(30) Priority: 19.10.2020 KR 20200135370
(43) Date of publication of application: 07.06.2023
(73) Proprietor: LG Energy Solution, Ltd., Seoul 07335 (KR)
(72) Inventor: KIM, Hee-Chan, Daejeon 34122 (KR); JUNG, Goan-Su, Daejeon 34122 (KR); LEE, Kyung-Min, Daejeon 34122 (KR); LEE, Seung-Jun, Daejeon 34122 (KR); SON, Kown, Daejeon 34122 (KR); LEE, Jong-Soo, Daejeon 34122 (KR); JEON, Seung-Joon, Daejeon 34122 (KR)
(74) Representative: Hoffmann Eitle
(86) International application number: PCT/KR2021/014283
(87) International publication number: WO 2022/086060

(56) References cited:
- CN-A- 110 010 810
- JP-A- 2019 075 191
- JP-A- 2019 075 191
- KR-B1- 101 706 717
- KR-B1- 101 918 022
- KR-B1- 102 154 314
- US-A1- 2018 347 738

## Description

### TECHNICAL FIELD

The present disclosure relates to a battery rack, a power storage device, and a power generation system, and more particularly, to a battery rack, a power storage device, and a power generation system that reduce manufacturing costs and are easy to install.

### BACKGROUND ART

Currently commercialized secondary batteries include nickel-cadmium batteries, nickel-hydrogen batteries, nickel-zinc batteries, and lithium secondary batteries, and among them, lithium secondary batteries have almost no memory effect compared to nickel-based secondary batteries, and thus, are in the spotlight for their advantages of free charge and discharge, extremely low self-discharge rate, and high energy density.

These lithium secondary batteries mainly use a lithium-based oxide and a carbon material as a positive electrode active material and a negative electrode active material, respectively. Lithium secondary batteries include an electrode assembly in which a positive electrode plate and a negative electrode plate to which a positive electrode active material and a negative electrode active material are applied, respectively, are arranged with a separator therebetween, and an exterior, that is, a battery pouch exterior, for sealing and storing the electrode assembly together with an electrolyte.

Recently, secondary batteries are widely used not only in small devices such as portable electronic devices, but also in medium and large devices such as vehicles or power storage devices. When used in these medium and large devices, a large number of secondary batteries are electrically connected to increase capacity and output. Especially, pouch-type secondary batteries are widely used in these medium and large devices due to an advantage of easy stacking.

Meanwhile, recently, as the need for a large-capacity structure as well as utilization as an energy storage source increases, there is an increasing demand for a plurality of secondary batteries connected in series and/or parallel, and a battery rack including a battery module that accommodates theses secondary batteries therein and a battery management system (BMS).

Also, such a battery rack generally includes a battery rack case of a metal material in order to protect a plurality of battery modules from external impact or accommodate and store the plurality of battery modules. Furthermore, as the demand for a high-capacity battery rack is increasing, the demand for a battery rack in which a plurality of battery modules of a heavy load are accommodated is increasing.

Battery racks of the related art has cooled secondary batteries or performed fire suppression by operating fire-fighting facilities when thermal runaway of secondary batteries of each battery module occurs or secondary batteries ignite or explode.

However, because positions of outlets of extinguishing agent supply pipes of provided fire-fighting facilities are different according to installation places, it is necessary to design a transfer pipe that transfers an extinguishing agent to a plurality of battery modules according to a position of an outlet of a supply pipe every time, and thus a battery rack including a plurality of battery modules has a problem of increasing manufacturing costs.

Furthermore, in the related art, an extremely difficult operation such as pipe welding has been required to perform an operation of connecting a supply pipe of a fire-fighting facility to a transfer pipe included in a battery rack. Accordingly, there has been a problem of increasing time and cost for installing a battery rack.

JP 2019 075191 A concerns a power storage device. The storage device stores a plurality of battery modules in a rack. A back panel attached to the rack is provided with a plurality of extinguishant supply pipes being provided corresponding to each battery module stored in the rack. One end of the extinguishant supply pipe is connected to the rear wall of the case of the battery module, and the other end of the extinguishant supply pipe is connected to a connection piping. Another end of the connection piping is connected to a relay device, which in turn is connected to a fire extinguisher supply device. The fire extinguisher supply device includes an extinguishant pipe, one end of which is connected with the relay device and the other end of which is connected with a pump, which in turn is connected to the extinguishant tank by a connector pipe.

CN 110 010 810 A concerns an energy storage battery cabinet with fire protection structure. Battery cases each including a plurality of batteries are placed in the cabinet body. Each battery box is provided with a fire-fighting liquid injection port for injecting a fire extinguishing agent. The fire injecting port may be a pipe disposed and sealed on the battery case. A fire-fighting pipeline is disposed on the cabinet body and is connected to the fire-fighting liquid injection port for injecting a fire extinguishing agent.

### DISCLOSURE

### Technical Problem

The present disclosure is designed to solve the problems of the related art, and therefore the present disclosure is directed to providing a battery rack, a power storage device, and a power generation system that reduce manufacturing costs and are easy to install.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims.

### Technical Solution

A battery rack according to the present invention for achieving the object is defined in claim 1 and includes:
a plurality of battery modules;
at least one battery rack case to accommodate the plurality of battery modules;
an injection pipe including a main body portion including an inlet through which an extinguishing agent is injected and extending along an arrangement of the plurality of battery modules, and a distribution unit extending toward each of the plurality of battery modules from the main body portion and including an outlet inserted into each of the plurality of battery modules; and
a flexible pipe to be bendable and including a first coupler located at one end of the flexible pipe to be connectable to a supply pipe for supplying the extinguishing agent, and a second coupler located at the other end of the flexible pipe to be connectable to the inlet of the injection pipe.

The flexible pipe has a flexible material, the flexible material being a plastic material, OR the flexible pipe has a bendable structure, wherein the flexible pipe is formed in the form of a multi-layered pipe by weaving a plurality of round and narrow stainless steel wires.

Also, the battery rack may further include a connector provided at an outlet of the supply pipe or the inlet of the injection pipe, having a nozzle shape, and including a fixing groove formed by retreating a portion of the nozzle shape in an inward direction.

Also, in the battery rack, the first coupler or the second coupler may include an accommodating space into which a portion of the connector is inserted.

Also, the first coupler or the second coupler may include a fixing protrusion to be fixed to the fixing groove of the connector in the accommodating space when the connector is inserted into the accommodating space.

Also, the distribution unit of the injection pipe may protrude and extend toward each of the plurality of battery modules in a form branched from the main body portion, and an extended end portion may be inserted into each of the plurality of battery modules by penetrating the same.

Also, a passive valve to be opened when an internal temperature of the battery module rises above a predetermined temperature may be provided at the end portion of the distribution unit, which is inserted into each of the battery modules by penetrating the same.

Furthermore, a connector may be provided at a lower end of the injection pipe.

Also, the battery rack may further include a drain pipe.

The drain pipe may include a third coupler located at one end portion of the drain pipe and configured to be connected to the connector provided at the lower end of the injection pipe, and a discharge valve located at the other end portion of the drain pipe and configured to control whether the extinguishing agent is discharged.

Also, the battery rack may include two or more battery rack cases stacked in upward and down ward directions.

The injection pipe may be provided on each of the two or more battery rack cases.

The battery rack may further include
an intermediate pipe to connect between an injection pipe provided on a battery rack case located on a relatively upper portion and an injection pipe provided on a battery rack case located on a relatively lower portion, among the stacked two or more battery rack cases, and to have a bendable form.

Furthermore, the main body portion of the injection pipe may have a shape branched to two or more parts from the inlet.

Furthermore, the battery rack case may include
a cover portion including an accommodating space that accommodates the flexible pipe or the intermediate pipe to cover the flexible pipe or the intermediate pipe.

In addition, a power storage device of the present invention for achieving the above object is defined in claim 9 and includes at least one battery rack as specified above.

Furthermore, a power generation system of the present invention for achieving the above object is defined in claim 10 and includes at least one battery rack as specified above.

### Advantageous Effects

According to an aspect of the present disclosure, by including a flexible pipe, the present disclosure may facilitate a connection between a supply pipe and an injection pipe of a fire-fighting facility provided at a place where a battery rack is installed. That is, because a position of an outlet of the supply pipe for supplying an extinguishing agent at the installation place where the battery rack is installed is not constant, when a pipe with a fixed position is used, there is a problem in that a separate custom-made connection pipe connecting the supply pipe and the injection pipe is additionally required. In contrast, the present disclosure may facilitate a connection between the outlet of the supply pipe and an inlet of the injection pipe by using the flexible pipe even when the position of the outlet of the supply pipe is not constant. Accordingly, the present disclosure may increase the efficiency of an operation of installing the battery rack and reduce manufacturing costs of the battery rack.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a rear perspective view schematically showing a battery rack according to an embodiment of the present disclosure.
FIG. 2 is a partial front view schematically showing some components of a battery rack, according to an embodiment of the present disclosure.
FIG. 3 is a partial front view schematically showing a flexible pipe of a battery rack, according to an embodiment of the present disclosure.
FIG. 4 is a plan view schematically showing components of FIG. 3.
FIG. 5 is a front view schematically showing some components of a battery rack, according to an embodiment of the present disclosure.
FIG. 6 is a partial perspective view schematically showing some components of a battery rack, according to an embodiment of the present disclosure.
FIG. 7 is a partial rear perspective view schematically showing some components of a battery rack, according to an embodiment of the present disclosure.
FIG. 8 is a partial rear perspective view schematically showing some components of a battery rack, according to another embodiment of the present disclosure.

### MODE FOR DISCLOSURE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that modifications could be made thereto within the scope of the appended claims.

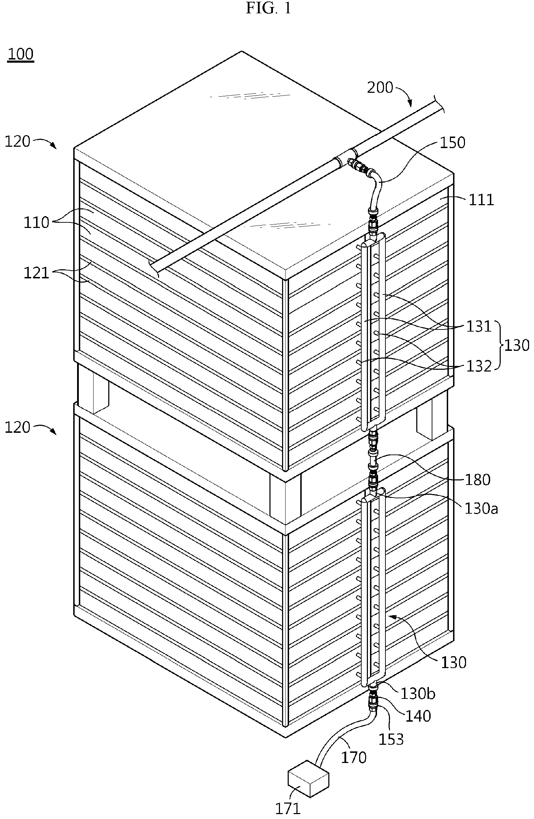

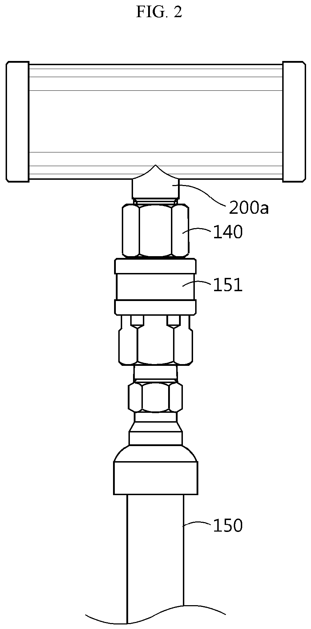

FIG. 1 is a rear perspective view schematically showing a battery rack according to an embodiment of the present disclosure. In addition, FIG. 2 is a partial front view schematically showing some components of a battery rack, according to an embodiment of the present disclosure.

Referring to FIGS. 1 and 2, a battery rack 100 according to an embodiment of the present disclosure includes a plurality of battery modules 110, at least one battery rack case 120, an injection pipe 130, and a flexible pipe 150.

Specifically, the plurality of battery modules 110 may be stored in the battery rack case 120 to be arranged in upward and downward directions. Each of the battery modules 110 may include a module housing 111 and a plurality of battery cells (not shown) provided in the module housing 111 and stacked in one direction. For example, the battery cells may be pouch-type battery cells.

However, the battery cells of the battery module 110 according to the present disclosure is not limited to the pouch-type battery cells, and various battery cells known at the time of filing of the present disclosure may be employed.

Also, the battery rack case 120 accommodates the plurality of battery modules 110 therein. For example, as shown in FIG. 2, the battery rack case 120 may include a plurality of storing plates 121 for storing one battery module 110. Two of the plurality of storing plates 121 may be configured to support in an upward direction lower end portions of the battery module 110 in left and right sides. Also, the two storing plates 121 may serve as a stopper for preventing the other battery module 110 placed thereunder from moving upward.

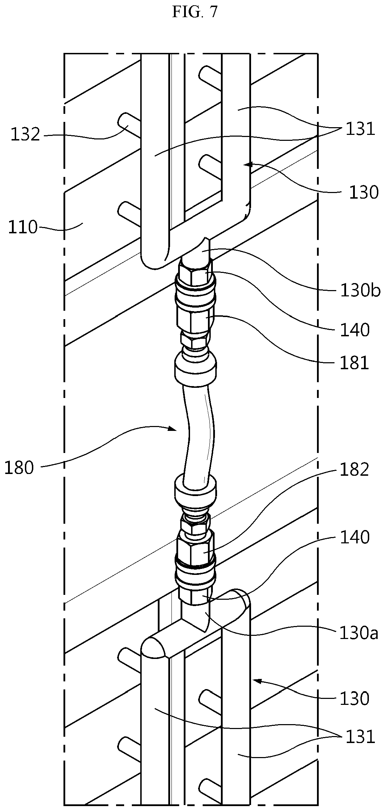

Furthermore, the injection pipe 130 includes a main body portion 131 and a distribution unit 132. The main body portion 131 includes an inlet 130a (see FIG. 7) through which an extinguishing agent (not shown) is injected and an outlet 130b (see FIG. 7). Here, the extinguishing agent may be a concentrated solution of an inorganic salt such as potassium carbonate, chemical foam, air foam, carbon dioxide, or water. The inlet may be located at an upper end of the main body portion 131. The outlet may be located at a lower end of the main body portion 131. The main body portion 131 may have a shape extending along an arrangement direction of the plurality of battery modules 110. The main body portion 131 may have a shape extending in the upward and downward directions along the battery modules 110 arranged in the upward and downward directions.

In addition, the distribution unit 132 has a shape extending from the main body portion 131 to each of the plurality of battery modules 110. That is, the distribution unit 132 may be a portion branched from the main body portion 131 to each of the plurality of battery modules 110. The distribution unit 132 extends toward the plurality of battery modules 110. An outlet (not shown) configured to discharge an extinguishing agent may be provided at an extended end portion of the distribution unit 132. The outlet is inserted into each of the plurality of battery modules 110.

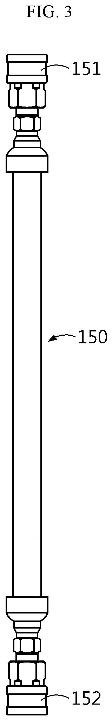

FIG. 3 is a partial front view schematically showing a flexible pipe of a battery rack, according to an embodiment of the present disclosure.

Referring to FIG. 3 together with FIGS. 1 and 2 again, the flexible pipe 150 includes a first coupler 151 and a second coupler 152. The first coupler 151 is coupled to one end of the flexible pipe 150. The first coupler 151 may be connected to a supply pipe 200 for supplying an extinguishing agent. That is, the first coupler 151 may be configured to be connected to an outlet 200a of the supply pipe 200. In addition, the second coupler 152 is coupled to the other end of the flexible pipe 150. The second coupler 152 may be connected to an inlet formed on an upper end of the main body portion 131 of the injection pipe 130.

Furthermore, the flexible pipe 150 is bendable. That is, in one claimed alternative, the flexible pipe 150 includes a flexible material. The flexible material is a plastic material. Alternatively, the flexible pipe 150 has a bendable structure. The flexible pipe 150 is formed in the form of a multi-layered pipe by weaving a plurality of round and narrow stainless steel wires.

Therefore, according to this configuration of the present disclosure, by including the flexible pipe 150, the present disclosure may facilitate a connection between the supply pipe 200 and the injection pipe 130 of a fire-fighting facility provided at a place where the battery rack 100 is installed. That is, because a position of the outlet 200a of the supply pipe 200 for supplying an extinguishing agent at the installation place where the battery rack 100 is installed is not constant, when a pipe with a fixed position is used, there is a problem in that a separate custom-made connection pipe connecting the supply pipe 200 and the injection pipe 130 is additionally required. In contrast, the present disclosure may facilitate a connection between the outlet 200a of the supply pipe 200 and an inlet of the injection pipe 130 by using the flexible pipe 150 even when the position of the outlet 200a of the supply pipe 200 is not constant. Accordingly, the present disclosure may increase the efficiency of an operation of installing the battery rack 100 and reduce manufacturing costs of the battery rack 100.

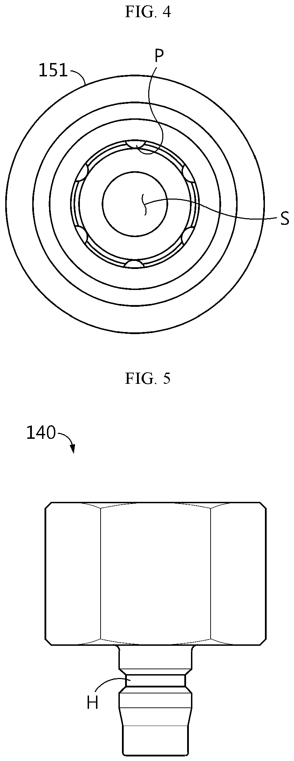

FIG. 4 is a plan view schematically showing components of FIG. 3. In addition, FIG. 5 is a front view schematically showing some components of a battery rack, according to an embodiment of the present disclosure.

Referring to FIGS. 4 and 5 together with FIGS. 1 and 3 again, the battery rack 100 according to an embodiment of the present disclosure may include a connector 140 configured to be detachably coupled to the first coupler 151 or the second coupler 152.

Specifically, the connector 140 may be provided at the outlet 200a of the supply pipe 200, the inlet 130a (see FIG. 7) of the injection pipe 130, and the outlet 130b (see FIG. 7). For example, the connector 140 may be coupled to the outlet 200a of the supply pipe 200. The connector 140 may also be coupled to the inlet 130a of the injection pipe 130. The connector 140 may have a nozzle shape protruding in one direction. The connector 140 may include a fixing groove H formed by retreating a portion of the nozzle shape in an inward direction.

Also, the first coupler 151 or the second coupler 152 may include an accommodating space S into which a portion (nozzle portion) of the connector 140 is inserted. The first coupler 151 or the second coupler 152 may include a fixing protrusion P to be fixed to the fixing groove H of the connector 140 in the accommodating space S when the connector 140 is inserted into the accommodating space S. The fixing protrusion P may include, for example, six metal beads (bearings).

That is, when the connector 140 is inserted into the accommodating space S of the first coupler 151 or the second coupler 152, the six metal beads may be inserted and fixed into the fixing groove H of the connector 140 by pressing the six metal beads by using an external housing provided in each of the couplers 151 and 152. However, embodiments of the present disclosure are not necessarily limited thereto, and a quick coupler or quick joint in various known forms may be employed as the first coupler 151 or the second coupler 152.

Therefore, according to this configuration of the present disclosure, the present disclosure may facilitate a connection between the flexible pipe 150 and the outlet 200a of the supply pipe 200 or the inlet 130a of the injection pipe 130 by using the connector 140 and the couplers 151 and 152 coupled to the connector 140. Accordingly, the present disclosure may increase the efficiency of an operation of installing the battery rack 100.

Referring back to FIG. 1, the distribution unit 132 of the injection pipe 130 may protrude and extend toward each of the plurality of battery modules 110 in a shape branched from the main body portion 131. In addition, an extended end portion of the distribution unit 132 may be inserted into each of the plurality of battery modules 110 by penetrating the same. For example, an opening may be formed in a rear surface of the module housing 111 of the battery module 110 so that an end portion (outlet) of the distribution unit 132 may be inserted thereto.

Therefore, according to this configuration of the present disclosure, the distribution unit 132 of the injection pipe 130 of the present disclosure is directly inserted into the battery module 110, and thus, an extinguishing agent may be directly sprayed into the battery module 110 in which a fire has occurred, and thus an extinguishing effect may be extremely excellent. Accordingly, the present disclosure may increase fire safety.

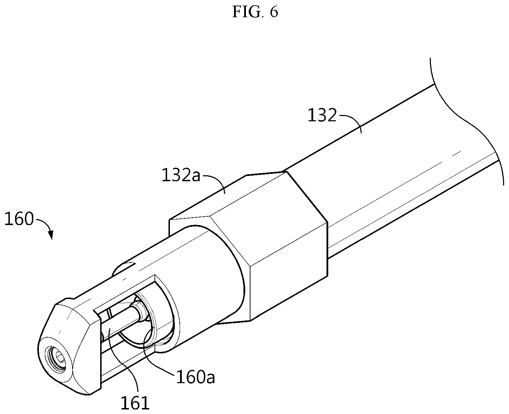

FIG. 6 is a partial perspective view schematically showing some components of a battery rack, according to an embodiment of the present disclosure.

Referring to FIG. 6 together with FIG. 1, the present disclosure may further include a passive valve 160 at an extended end portion 132a of the distribution unit 132, which is inserted into each of the battery modules 110 by penetrating the same. The passive valve 160 may be configured such that the valve is opened when an internal temperature of the battery module 110 rises above a predetermined temperature. That is, the passive valve 160 may be an outlet of the distribution unit 132.

Specifically, the passive valve 160 may include a glass bulb 161 configured to be broken at a predetermined temperature or higher. The glass bulb 161 may be configured to usually close an outlet 160a of the passive valve 160. However, when the glass bulb 161 increases in temperature and thus ruptured and is lost to the outside, a closed state of the outlet 160a of the passive valve 160 may be released, and the outlet 160a of the passive valve may be opened.

Therefore, according to this configuration of the present disclosure, by including the passive valve 160, the present disclosure may supply an extinguishing agent because only a valve of a distribution unit 132, which is inserted into a battery module 110 where a fire has occurred, is opened when the fire occurs in only some of the plurality of battery modules 110. Because the extinguishing agent is not supplied to the remaining battery modules 110 where the fire has not occurred, there is an advantage in that the remaining battery modules 110 may be re-used after the fire is extinguished. Also, in the present disclosure, because an extinguishing agent is not supplied to an unnecessary place, the extinguishing agent may be rapidly supplied to battery modules 110 that need extinguishing, thereby increasing the speed of extinguishing suppression.

Referring back to FIG. 1, the battery rack 100 of the present disclosure may further include a drain pipe 170. The drain pipe 170 may be bendable. Also, an outlet 130b may be provided at a lower portion of the injection pipe 130. The connector 140 may be provided at the outlet 130b. The drain pipe 170 may be configured to be connected to the connector 140 located at one end portion thereof and coupled to a lower end of the injection pipe 130. For example, the drain pipe 170 may include a third coupler 153 configured to be connected to the connector 140.

Also, the drain pipe 170 may include a discharge valve 171 at the other end portion thereof. The discharge valve 17 may be configured to control whether the extinguishing agent is discharged. That is, when the discharge valve 17 is opened, the extinguishing agent existing inside the injection pipe 130 may be discharged to the outside through the drain pipe 170.

Therefore, according to this configuration of the present disclosure, the present disclosure may facilitate discharging of the extinguishing agent remaining in the injection pipe 130 to the outside through the drain pipe 170. That is, the present disclosure may discharge an unnecessary extinguishing agent to the outside after fire suppression is finished, and after a fire, may facilitate performing of a subsequent operation.

FIG. 7 is a partial rear perspective view schematically showing some components of a battery rack, according to an embodiment of the present disclosure. That is, FIG. 7 shows an enlarged state of a portion between stacked battery rack cases 120.

Referring to FIG. 7 together with FIG. 1 again, the battery rack 100 according to an embodiment of the present disclosure may include two or more battery rack cases 120 stacked in the upward and downward directions. In this case, the injection pipe 130 may be provided on each of the two or more battery rack cases 120.

Also, the battery rack 100 may further include an intermediate pipe 180. The intermediate pipe 180 may connect between an injection pipe 130 provided on a battery rack case 120 located on a relatively upper portion and an injection pipe 130 provided on a battery rack case 120 located on a relatively lower portion, among the stacked two or more battery rack cases 120. That is, the intermediate pipe 180 may be located between stacked two battery rack cases 120. For example, as shown in FIG. 1, one end of the intermediate pipe 180 may be connected to an outlet 130b of an injection pipe 130 connected to a battery rack case 120 located on a relatively upper portion among the stacked two battery rack cases 120. Also, the other end of the intermediate pipe 180 may be connected to an inlet of an injection pipe 130 connected to a battery rack case 120 located on a relatively lower portion among the stacked two battery rack cases 120.

The intermediate pipe 180 may include a fourth coupler 181 and a fifth coupler 182. The fourth coupler 181 may be configured to be connected to an outlet 130b of an injection pipe 130 located on an upper portion among injection pipes 130 arranged in upward and downward directions. For example, the fourth coupler 181 may be configured to be coupled to a connector 140 provided at the outlet 130b of the injection pipe 130. The fifth coupler 182 may be configured to be connected to an inlet 130a of an injection pipe 130 located on a lower portion among the injection pipes 130 arranged in the upward and downward directions. For example, the fifth coupler 182 may be configured to be coupled to a connector 140 provided at the inlet 130a of the injection pipe 130.

Furthermore, the intermediate pipe 180 may include a bendable pipe. That is, a pipe having a flexible material or a bendable structure may be applied in the same manner as the flexible pipe 150 described above.

Therefore, according to this configuration of the present disclosure, by including the intermediate pipe 180, the present disclosure facilitates the transfer of an extinguishing agent between at least two battery rack cases 120. Accordingly, manufacturing costs of the battery rack 100 may be reduced by simplifying a structure of a member for supplying an extinguishing agent.

Furthermore, in a case where the intermediate pipe 180 is bendable, even when there is a spaced error between stacked battery rack cases 120, injection pipes 130 may be easily connected by using the flexible pipe 150. Accordingly, the present disclosure has an advantage of easy installation.

Also, the main body portion 131 of the injection pipe 130 may have a shape branched to at least two parts from the inlet 130a. For example, as shown in FIG. 7, a main body portion 131 of each of the injection pipes 130 arranged in the upward and downward directions may have a shape branched to two parts.

Therefore, according to this configuration of the present disclosure, by including an injection pipe 130 having a shape branched to at least two parts, when an extinguishing agent is injected into a battery module 110 through a distribution unit 132 connected to any one of branched pipes of a main body portion 131 of an injection pipe 130 located on an upper portion among injection pipes 130 arranged in the upward and the downward directions, the present disclosure has an advantage of transferring the extinguishing agent to an injection pipe 130 located on a lower portion through the remaining pipe unselected from the branched pipes of the main body portion 131 while the extinguishing agent is filled into the battery module 110.

In contrast, when the injection pipe 130 includes a single pipe rather than having a branched shape, transferring of an extinguishing agent to an injection pipe located on a relatively lower portion may not be smooth while the extinguishing agent is filled into a specific battery module 110.

Accordingly, when a fire occurs in all stacked battery rack cases, the present disclosure has an advantage of being able to smoothly supplying an extinguishing agent to the battery rack cases at the same time.

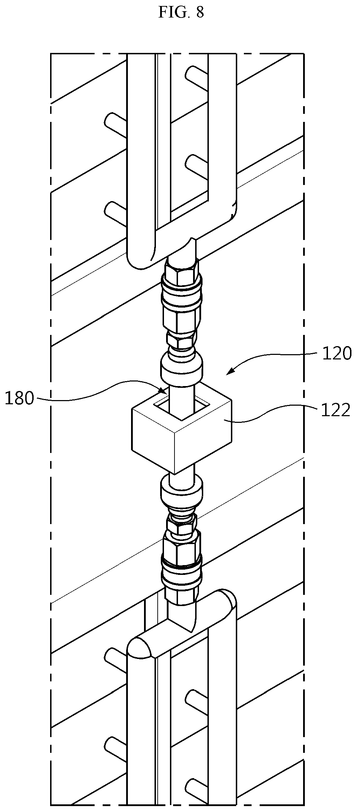

FIG. 8 is a partial rear perspective view schematically showing some components of a battery rack, according to another embodiment of the present disclosure.

Referring to FIG. 8, the battery rack 100 according to another embodiment of the present disclosure may further include a cover portion 122 configured to cover the flexible pipe 150 or the intermediate pipe 180 when compared to the battery rack 100 of FIG. 1. Also, the cover portion 122 may include an accommodating space for the flexible pipe 150 or the intermediate pipe 180. The cover portion 122 may include a wall extending to surround the flexible pipe 150 or the intermediate pipe 180.

For example, as shown in FIG. 8, the cover portion 122 may have a shape bent in a horizontal direction several times to surround the intermediate pipe 180. Although not shown, the battery rack case 120 may include a separate cover portion configured to cover the flexible pipe 150.

Referring back to FIG. 1, a power storage device according to the present disclosure includes at least one battery rack 100 according to the present disclosure. For example, as shown in FIG. 1, the power storage device may include two or more battery rack cases 120 according to the present disclosure in a stacked form. In addition, battery modules 110 stored in each of the plurality of battery rack cases 120 may be electrically connected to each other. The power storage device according to the present disclosure may be implemented in various forms, such as a smart grid system or an electric charging station.

Meanwhile, the present disclosure provides a power generation system including at least one battery rack 100. The power generation system may include a hydro power generator, a thermal power generator, a wind power generator, a solar generator, and the like. Electricity generated from these generators may be stored in the battery rack 100.

Meanwhile, although the terms indicating directions such as up, down, left, right, front, and back are used in the present specification, it would be obvious to a person skilled in the art that the terms are only for convenience of description and may vary depending on the position of an object or the position of an observer.

As described above, although the present disclosure has been described with reference to limited embodiments and drawings, the present disclosure is not limited thereto, and various modifications and variations are possible within the scope of the appended claims.

**[Explanation of numeral references]**

| | | | |
|---|---|---|---|
| 100: | Battery rack | | |
| 110: | Battery module | 111: | Module case |
| 120: | battery rack case | 121: | Storing plate |
| 200: | Supply pipe | 130: | Injection pipe |
| 131, 132: | Main body portion, Distribution unit | | |
| 140: | Connector | 150: | Flexible pipe |
| 151, 152, 153, 154, 155: | First coupler, Second coupler, Third coupler, Fourth coupler, Fifth coupler | | |
| H: | Fixing groove | P: | Fixing protrusion |
| 160: | Passive valve | 161: | Glass bulb |
| 170: | Drain pipe | | |
| 171: | Discharge valve | 180: | Intermediate pipe |
| 122: | Cover portion | | |

## Claims

1. A battery rack (100) comprising:
a plurality of battery modules (110);
at least one battery rack case (120) to accommodate the plurality of battery modules (110);
an injection pipe (130) comprising a main body portion (131) including an inlet (130a) through which an extinguishing agent is injected and extending along an arrangement direction of the plurality of battery modules (110), and a distribution unit (132) extending toward each of the plurality of battery modules (110) from the main body portion (131) and including an outlet inserted into each of the plurality of battery modules (110); and
a flexible pipe (150) to be bendable and comprising a first coupler (151) located at one end of the flexible pipe (150) to be connectable to a supply pipe (200) for supplying the extinguishing agent, and a second coupler (152) located at the other end of the flexible pipe (150) to be connectable to the inlet (130a) of the injection pipe (130),
wherein the flexible pipe (150) has a flexible material, the flexible material being a plastic material, OR
the flexible pipe (150) has a bendable structure, wherein the flexible pipe (150) is formed in the form of a multi-layered pipe by weaving a plurality of round and narrow stainless steel wires.

2. The battery rack (100) of claim 1, further comprising
a connector (140) provided at an outlet (200a) of the supply pipe (200) or the inlet (130a) of the injection pipe (130), having a nozzle shape, and comprising a fixing groove (H) formed by retreating a portion of the nozzle shape in an inward direction,
wherein the first coupler (151) or the second coupler (152) includes an accommodating space (S) into which a portion of the connector (140) is inserted, and
the first coupler (151) or the second coupler (152) comprises a fixing protrusion (P) to be fixed to the fixing groove (H) of the connector (140) in the accommodating space (S) when the connector (140) is inserted into the accommodating space (S).

3. The battery rack (100) of claim 1, wherein the distribution unit (132) of the injection pipe (130) protrudes and extends toward each of the plurality of battery modules (110) in a shape branched from the main body portion (131), and an extended end portion (132a) of the distribution unit (132) is inserted into each of the plurality of battery modules (110) by penetrating the same.

4. The battery rack (100) of claim 3, wherein a passive valve (160) to be opened when an internal temperature of the battery module (110) rises above a predetermined temperature is provided at the extended end portion (132a) of the distribution unit (132), which is inserted into each of the battery modules (110) by penetrating the same.

5. The battery rack (100) of claim 1, wherein a connector (140) is provided at a lower end of the injection pipe (130), and
the battery rack (100) further comprises a drain pipe (170) comprising a third coupler (153) located at one end portion of the drain pipe (170) and configured to be connected to the connector (140) provided at the lower end of the injection pipe (130), and a discharge valve (17) located at the other end portion of the drain pipe (170) and configured to control whether the extinguishing agent is discharged.

6. The battery rack (100) of claim 1, wherein the battery rack case comprises two or more battery rack cases (120) stacked in upward and downward directions,
the injection pipe (130) is provided on each of the two or more battery rack cases (120), and
the battery rack (100) further comprises an intermediate pipe (180) to connect between an injection pipe (130) provided on a battery rack case (120) located on a relatively upper portion and an injection pipe (130) provided on a battery rack case (120) located on a relatively lower portion, among the stacked two or more battery rack cases (120), and to have a bendable form.

7. The battery rack (100) of claim 6, wherein the main body portion (131) of the injection pipe (130) has a shape branched to two or more parts from the inlet (130a).

8. The battery rack (100) of claim 6, wherein the battery rack case (120) comprises a cover portion (122) including an accommodating space that accommodates the flexible pipe (150) or the intermediate pipe (180) to cover the flexible pipe (150) or the intermediate pipe (180).

9. A power storage device comprising at least one battery rack (100) according to any one of claims 1 to 8.

10. A power generation system comprising at least one battery rack (100) according to any one of claims 1 to 8.

## Patentansprüche

1. Batteriegestell (100), das Folgendes umfasst:
eine Vielzahl von Batteriemodulen (110);
mindestens ein Batteriegestellgehäuse (120) zur Aufnahme der Vielzahl von Batteriemodulen (110);
ein Injektionsrohr (130), das einen Hauptkörperabschnitt (131) umfasst, der einen Einlass (130a) einschließt, durch den ein Löschmittel injiziert wird, und sich entlang einer Anordnungsrichtung der Vielzahl von Batteriemodulen (110) erstreckt, und eine Verteilungseinheit (132), die sich von dem Hauptkörperabschnitt (131) zu jedem der Vielzahl von Batteriemodulen (110) hin erstreckt und einen in jedes der Vielzahl von Batteriemodulen (110) eingeführten Auslass einschließt; und
ein flexibles Rohr (150), das biegsam ist und eine erste Kopplung (151) umfasst, das an einem Ende des flexiblen Rohrs (150) angeordnet ist, um mit einem Zufuhrrohr (200) für die Zufuhr des Löschmittels verbunden werden zu können, und eine zweite Kopplung (152), das am anderen Ende des flexiblen Rohrs (150) angeordnet ist, um mit dem Einlass (130a) des Injektionsrohrs (130) verbunden werden zu können,
wobei das flexible Rohr (150) ein flexibles Material aufweist, wobei das flexible Material ein Kunststoffmaterial ist, oder
das flexible Rohr (150) eine biegsame Struktur aufweist, wobei das flexible Rohr (150) in Form eines mehrschichtigen Rohres durch Verweben einer Vielzahl von runden und schmalen Edelstahldrähten gebildet ist.

2. Batteriegestell (100) nach Anspruch 1, weiter umfassend
ein Verbindungsstück (140), das an einem Auslass (200a) des Zufuhrrohrs (200) oder dem Einlass (130a) des Injektionsrohrs (130) bereitgestellt ist, eine Düsenform aufweist und eine Befestigungsnut (H) umfasst, die durch Zurückziehen eines Abschnitts der Düsenform in einer Richtung nach innen gebildet wird,
wobei die erste Kopplung (151) oder die zweite Kopplung (152) einen Aufnahmeraum (S) einschließt, in den ein Abschnitt des Verbindungsstücks (140) eingeführt wird, und
die erste Kopplung (151) oder die zweite Kopplung (152) einen Befestigungsvorsprung (P) umfasst, der an der Befestigungsnut (H) des Verbindungsstücks (140) in dem Aufnahmeraum (S) zu befestigen ist, wenn das Verbindungsstück (140) in den Aufnahmeraum (S) eingeführt wird.

3. Batteriegestell (100) nach Anspruch 1, wobei die Verteilungseinheit (132) des Injektionsrohrs (130) in Richtung jedes der Vielzahl von Batteriemodulen (110) in einer von dem Hauptkörperabschnitt (131) verzweigten Form vorsteht und sich erstreckt, und ein verlängerter Endabschnitt (132a) der Verteilungseinheit (132) in jedes der Vielzahl von Batteriemodulen (110) durch Durchdringen desselben eingeführt wird.

4. Batteriegestell (100) nach Anspruch 3, wobei ein passives Ventil (160), das zu öffnen ist, wenn eine Innentemperatur des Batteriemoduls (110) über eine vorbestimmte Temperatur ansteigt, an dem verlängerten Endabschnitt (132a) der Verteilungseinheit (132) bereitgestellt ist, die in jedes der Batteriemodule (110) durch Durchdringen desselben eingeführt wird.

5. Batteriegestell (100) nach Anspruch 1, wobei an einem unteren Ende des Injektionsrohrs (130) ein Verbindungsstück (140) bereitgestellt ist, und
das Batteriegestell (100) weiter ein Ablassrohr (170) umfasst, das eine dritte Kopplung (153) umfasst, die sich an einem Endabschnitt des Ablassrohrs (170) befindet und so konfiguriert ist, dass sie mit dem am unteren Ende des Injektionsrohrs (130) bereitgestellten Verbindungsstück (140) verbunden werden kann, und ein Auslassventil (17), das sich am anderen Endabschnitt des Ablassrohrs (170) befindet und so konfiguriert ist, dass es steuert, ob das Löschmittel ausgelassen wird.

6. Batteriegestell (100) nach Anspruch 1, wobei das Batteriegestellgehäuse zwei oder mehr Batteriegestellgehäuse (120) umfasst, die in Aufwärts- und Abwärtsrichtung gestapelt sind,
das Injektionsrohr (130) an jedem der zwei oder mehr Batteriegestellgehäuse (120) bereitgestellt ist, und
das Batteriegestell (100) weiter ein Zwischenrohr (180) umfasst, um eine Verbindung zwischen einem Injektionsrohr (130), das an einem Batteriegestellgehäuse (120) bereitgestellt ist, das sich an einem relativ oberen Abschnitt befindet, und einem Injektionsrohr (130), das an einem Batteriegestellgehäuse (120) bereitgestellt ist, das sich an einem relativ unteren Abschnitt befindet, unter den gestapelten zwei oder mehr Batteriegestellgehäusen (120) herzustellen, und um eine biegsame Form aufzuweisen.

7. Batteriegestell (100) nach Anspruch 6, wobei der Hauptkörperabschnitt (131) des Injektionsrohrs (130) eine vom Einlass (130a) in zwei oder mehr Teile verzweigte Form aufweist.

8. Batteriegestell (100) nach Anspruch 6, wobei das Batteriegestellgehäuse (120) einen Abdeckungsabschnitt (122) umfasst, der einen Aufnahmeraum einschließt, der das flexible Rohr (150) oder das Zwischenrohr (180) aufnimmt, um das flexible Rohr (150) oder das Zwischenrohr (180) abzudecken.

9. Energiespeichervorrichtung, die mindestens ein Batteriegestell (100) nach einem der Ansprüche 1 bis 8 umfasst.

10. Stromerzeugungssystem, das mindestens ein Batteriegestell (100) nach einem der Ansprüche 1 bis 8 umfasst.

## Revendications

1. Support (100) de batterie comprenant :
une pluralité de modules (110) de batterie ;
au moins un boîtier (120) de support de batterie pour loger la pluralité de modules (110) de batterie ;
un tuyau d'injection (130) comprenant une partie (131) de corps principal incluant une entrée (130a) à travers laquelle un agent d'extinction est injecté et s'étendant le long d'une direction d'agencement de la pluralité de modules (110) de batterie, et une unité de distribution (132) s'étendant vers chacun de la pluralité de modules (110) de batterie à partir de la partie (131) de corps principal et incluant une sortie insérée dans chacun de la pluralité de modules (110) de batterie ; et
un tuyau flexible (150) devant être pliable et comprenant un premier coupleur (151) situé au niveau d'une extrémité du tuyau flexible (150) pour pouvoir être relié à un tuyau d'alimentation (200) pour fournir l'agent d'extinction, et un deuxième coupleur (152) situé au niveau de l'autre extrémité du tuyau flexible (150) pour pouvoir être relié à l'entrée (130a) du tuyau d'injection (130),
dans lequel le tuyau flexible (150) présente un matériau flexible, le matériau flexible étant un matériau plastique, OU
le tuyau flexible (150) présente une structure pliable, dans lequel le tuyau flexible (150) est formé sous la forme d'un tuyau multicouche en tissant une pluralité de fils ronds et étroits en acier inoxydable.

2. Support (100) de batterie selon la revendication 1, comprenant en outre
un connecteur (140) prévu au niveau d'une sortie (200a) du tuyau d'alimentation (200) ou de l'entrée (130a) du tuyau d'injection (130), présentant une forme de buse, et comprenant une rainure de fixation (H) formée en retraitant une partie de la forme de buse dans une direction vers l'intérieur,
dans lequel le premier coupleur (151) ou le deuxième coupleur (152) inclut un espace de logement (S) dans lequel une partie du connecteur (140) est insérée, et
le premier coupleur (151) ou le deuxième coupleur (152) comprend une saillie de fixation (P) devant être fixée à la rainure de fixation (H) du connecteur (140) dans l'espace de logement (S) lorsque le connecteur (140) est inséré dans l'espace de logement (S).

3. Support (100) de batterie selon la revendication 1, dans lequel l'unité de distribution (132) du tuyau d'injection (130) fait saillie et s'étend vers chacun de la pluralité de modules (110) de batterie dans une forme ramifiée à partir de la partie (131) de corps principal, et une partie d'extrémité étendue (132a) de l'unité de distribution (132) est insérée dans chacun de la pluralité de modules (110) de batterie en pénétrant dans ceux-ci.

4. Support (100) de batterie selon la revendication 3, dans lequel une soupape passive (160) devant être ouverte lorsqu'une température interne du module (110) de batterie s'élève au-dessus d'une température prédéterminée est prévue au niveau de la partie d'extrémité étendue (132a) de l'unité de distribution (132), qui est insérée dans chacun des modules (110) de batterie en pénétrant dans ceux-ci.

5. Support (100) de batterie selon la revendication 1, dans lequel un connecteur (140) est prévu au niveau d'une extrémité inférieure du tuyau d'injection (130), et
le support (100) de batterie comprend en outre un tuyau de drainage (170) comprenant un troisième coupleur (153) situé au niveau d'une partie d'extrémité du tuyau de drainage (170) et configuré pour être relié au connecteur (140) prévu au niveau de l'extrémité inférieure du tuyau d'injection (130), et une soupape de décharge (17) située au niveau de l'autre partie d'extrémité du tuyau de drainage (170) et configurée pour contrôler si l'agent d'extinction est déchargé.

6. Support (100) de batterie selon la revendication 1, dans lequel le boîtier de support de batterie comprend deux boîtiers (120) de support de batterie ou plus empilés dans des directions vers le haut et vers le bas,
le tuyau d'injection (130) est prévu sur chacun des deux boîtiers (120) de support de batterie ou plus, et
le support (100) de batterie comprend en outre un tuyau intermédiaire (180) devant se relier entre un tuyau d'injection (130) prévu sur un boîtier (120) de support de batterie situé sur une partie relativement supérieure et un tuyau d'injection (130) prévu sur un boîtier (120) de support de batterie situé sur une partie relativement inférieure, parmi les deux boîtiers (120) de support de batterie ou plus empilés, et pour présenter une forme pliable.

7. Support (100) de batterie selon la revendication 6, dans lequel la partie (131) de corps principal du tuyau d'injection (130) présente une forme ramifiée en deux parties ou plus à partir de l'entrée (130a).

8. Support (100) de batterie selon la revendication 6, dans lequel le boîtier (120) de support de batterie comprend une partie (122) de couvercle incluant un espace de logement qui loge le tuyau flexible (150) ou le tuyau intermédiaire (180) pour recouvrir le tuyau flexible (150) ou le tuyau intermédiaire (180).

9. Dispositif de stockage d'énergie comprenant au moins un support (100) de batterie selon l'une quelconque des revendications 1 à 8.

10. Système de production d'énergie comprenant au moins un support (100) de batterie selon l'une quelconque des revendications 1 à 8.
